**Europäisches Patentamt**

**European Patent Office**

**Office européen des brevets**

(19)

(11) Veröffentlichungsnummer **0 073 484**
**B1**

# EUROPÄISCHE PATENTSCHRIFT

(12)

(45) Veröffentlichungstag der Patentschrift:
15.10.86

(51) Int. Cl.⁴: **F 16 L 25/02**

(21) Anmeldenummer: **82107849.0**

(22) Anmeldetag: **26.08.82**

(54) **Elektrische Trennstelle.**

(30) Priorität: **29.08.81 DE 3134205**

(43) Veröffentlichungstag der Anmeldung:
**09.03.83 Patentblatt 83/10**

(45) Bekanntmachung des Hinweises auf die Patenterteilung:
**15.10.86 Patentblatt 86/42**

(84) Benannte Vertragsstaaten:
**AT DE FR GB IT**

(56) Entgegenhaltungen:
**DE-B-1 272 649**
**DE-B-1 965 422**
**DE-U-6 920 760**

(73) Patentinhaber: **Klinger AG, Baarerstrasse 10, CH-6301 Zug (CH)**

(72) Erfinder: **Bach, Kurt, Lenzenmühle, D-6272 Niedernhausen (DE)**
Erfinder: **Wirz, Peter, Im Juch 733, CH- Unterkulm (Aargau) (CH)**

(74) Vertreter: **Dipl.- Ing. H. Marsch Dipl.- Ing. K. Sparing Dipl.- Phys.Dr. W.H. Röhl Patentanwälte, Rethelstrasse 123, D-4000 Düsseldorf (DE)**

**Beschreibung**

Die Erfindung betrifft eine elektrische Trennstelle in Rohrleitungsteilen, bei der rohrförmige Abschnitte zur Gänze oder an den Enden unter Zwischenschaltung einer elektrisch isolierenden Schicht aus anorganischem Isolierstoff kraftübertragend und dicht verbindend miteinander in Eingriff stehen.

Aus dem DE-U-6 920 760 ist eine derartige elektrische Trennstelle bekannt, bei der ein Ringspalt zwischen den beiden zu isolierenden Rohrteilen mit einer selbstbindenden hitzbeständigen körnigen Masse, etwa ein Spezialzement, ausgefüllt ist. Außerdem kann wenigstens eines der beiden Rohrteile zusätzlich mit einer hitzebeständigen Isolierschicht, z. B. Aluminiumoxid, versehen sein, um das Fliessen von elektrischen Kriechströmen zu vermeiden. Derartige Isolierschichten lassen sich nur in relativ geringen Dicken einwandfrei aufbringen, abgesehen davon, daß dickere Schichten auch größere Kosten verursachen würden. Infolge der geringen Dicke der Isolierschicht läßt jedoch jede kleinste Fehlstelle einen elektrischen Überschlag zwischen den beiden Rohrleitungsteilen zu, wobei Inhomogenitäten der Isolierschicht im übrigen nicht vermeidbar sind.

Aufgabe der Erfindung ist es, eine elektrische Trennstelle der eingangs genannten Art zu schaffen, die trotz relativ geringer Dicke der Isolierschicht Überschläge zwischen den Rohrleitungsteilen verhindert.

Diese Aufgabe wird dadurch gelöst, daß die Schicht aus anorganischem Isolierstoff mit einer elektrisch isolierenden, feuchtigkeitsabweisenden Tränkung versehen ist.

Bei dem anorganischen Isolierstoff, der zwischen zwei Rohrleitungsteilen (zu denen auch Absperrorgane gehören) zwischengeschaltet ist, handelt es sich beispielsweise um Aluminium-, Zirkonoxid oder Siliciumnitrid. Der Isolierstoff wird vorzugsweise durch thermisches Aufspritzen aufgebracht. Durch die Tränkung werden Hohlräume in der Isolierschicht ausgefüllt und dadurch deren Inhomogenitäten beseitigt. Insbesondere ist die Schicht aus anorganischem Isolierstoff mit einem elektrisch isolierenden, feuchtigkeitsabweisenden Überzug versehen.

Die Dicke der aufgebrachten Schicht richtet sich nach den elektrischen Eigenschaften des verwendeten Isolierstoffs und den an die Trennstelle gestellten Forderungen. Die Übertragung der Rohrleitungskräfte über derartige Schichten bei gleichzeitiger Abdichtung ist deshalb möglich, weil diese Schichten bei guter Reinheit der anorganischen Isolierstoffe dünn ausgebildet werden können, wobei bei der Aufbringung auf die Eingriffsfläche eines Rohrleitungsteils durch Aufspritzen eine Nachbearbeitung der Schicht nicht erforderlich ist.

Die Eingriffsfläche eines Rohrleitungsteils, auf das die Schicht aufgebracht wird, kann beispielsweise radial verlaufen, wobei axiale Kräfte aufgebracht werden müssen, um eine gegenseitige Druckeinwirkung zwischen den zusammenwirkenden Eingriffsflächen der beiden Rohrleitungsteile zu erzielen. Dies kann durch Verschraubung oder Umformung eines Endes eines Rohrleitungsteils erzielt werden. Vorteilhaft sind jedoch die Eingriffsflächen der Rohrleitungsteile im wesentlichen zylindrisch ausgebildet, wobei die Schicht außen an der im Zylinderdurchmesser kleineren Eingriffsfläche vorgesehen ist und der Rohrleitungsteil mit der im Durchmesser größeren Eingriffsfläche unter Dehnung an dem anderen Rohrleitungsteil anliegt. Eine solche Preßsitzverbindung kann durch Einpressen oder andere elastische oder plastische Verformung mindestens eines Rohrleitungsteils im Bereich der Eingriffsflächen erzielt werden. Dabei tritt natürlich gleichzeitig eine Druckbeanspruchung im Rohrleitungsteil mit kleinerem Durchmesser auf. Vorteilhaft kann eine solche Verbindung auch dadurch erzielt werden, daß eine Schrumpfverbindung zwischen den beiden zusammenwirkenden Eingriffsflächen hergestellt wird. Eine Preßsitzverbindung der beiden Rohrleitungsteile ist insbesondere auch durch Verformung des äußeren Rohrleitungsteils in Ausnehmungen der im Zylinderdurchmesser kleineren Eingriffsfläche möglich.

Isolierstücke können hergestellt werden, bei welchen sich die Trennstelle praktisch über die ganze Länge dieses Rohrleitungsteils erstreckt und die Anschlüsse zu den anschließenden Leitungsteilen über eine Preßsitzverbindung erfolgen. Falls erforderlich, kann noch eine Verschweißung der Verbindung erfolgen. Wenn die Preßsitzverteilung nur im Zusammenwirken mit dem äußeren Rohrleitungsteil der Trennstelle erfolgt, wird so die Dehnbeanspruchung des umschlossenen Rohrleitungsteils vermindert.

Die Erfindung wird nachstehend anhand der in den beigefügten Abbildungen im Schnitt dargestellten Ausführungsformen näher erläutert.

Fig. 1 zeigt einen Gasabsperrhahn mit einer elektrischen Trennstelle.

Fig. 2 zeigt eine weitere Ausführungsform einer elektrischen Trennstelle für einen Gashahn.

Fig. 3 zeigt ein in eine Rohrleitung einbaubares Isolierstück mit einer elektrischen Trennstelle.

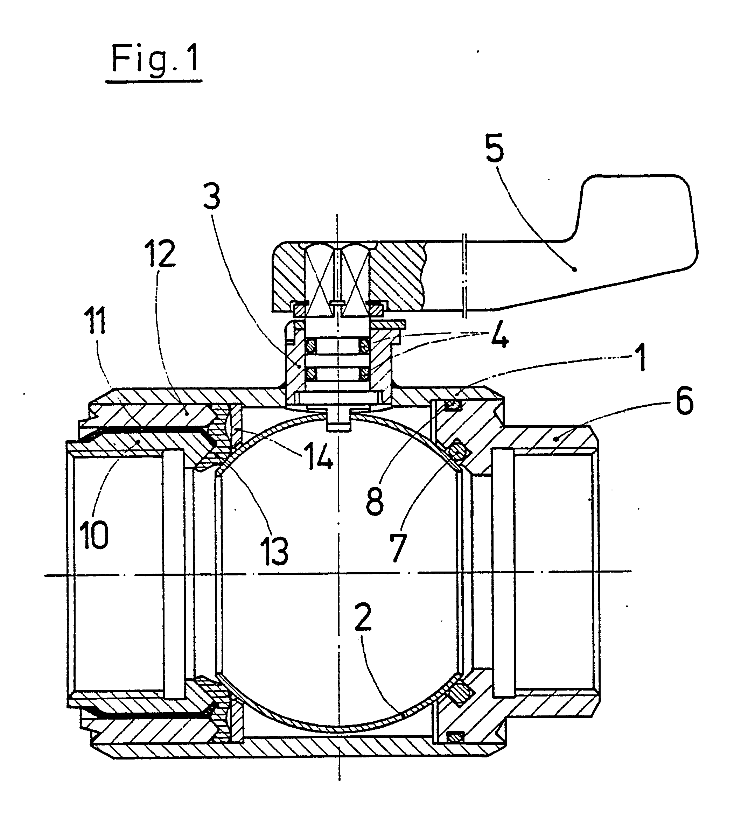

Der in Fig. 1 dargestellte Gasabsperrhahn weist als Schaltglied eine in einem Rohrgehäuse 1 angeordnete Kugel 2 auf, die über einen gegen das Rohrgehäuse 1 mittels O-Ringen 4 abgedichteten Bewegungsbolzen 3 durch einen Betätigungsgriff 5 schaltbar ist. Das Rohrgehäuse 1 ist an einer Seite durch einen eingesetzten und verschweißten Gewindestutzen 6 verschlossen, der auch eine O-Ring-Abdichtung 7, 8 gegen die Kugel 2 bzw. das Rohrgehäuse 1 trägt. Am anderen Ende ist das Rohrgehäuse 1 durch eine elektrische Trennstelle verschlossen.

Diese besteht aus einer Gewindebüchse 10, die an ihrem zylindrischen Außenumfang und an ihren beidseitigen Abschrägungen mit einer 0,5 mm dicken Schicht 11 aus $Al_2O_3$ versehen ist, die mittels Plasmaspritzen aufgebracht wurde. Die beim Gasbetrieb üblicherweise gewünschten Isolationswerte werden damit gut erreicht. Auf die beschichtete Gewindebüchse 10 ist mit einem Durchmesserübermaß von 0,13 mm nach einer Erwärmung auf 300° C eine Verbindungshülse 12 geschoben, die nach dem Erkalten mit Schrumpfsitz auf der Schicht 11 der Gewindebüchse 10 aufsitzt. Die so ausgebildete Trennstelle ist mit dem Rohrgehäuse 1 verschweißt, wobei die Verbindungshülse 12 mit Preßsitz in die Eindrehung des Rohrgehäuses 1 eingebracht ist. Durch die vom Rohrgehäuse 1 ausgeübten Druckkräfte wird die Verbindungshülse 12 von den Zugbeanspruchungen des Schrumpfsitzes mindestens teilweise entlastet. Als zusätzliche Abdichtung gegen Trennstelle, Rohrgehäuse und Kugel 2 ist ein Kautschukformstück 13 vorgesehen, das im Gehäuseraum zwischen der elektrischen Trennstelle und einem Stützring 14 angeordnet ist. Vor der Montage wird die Schicht 11 mit einer elektrisch isolierenden, feuchtigkeitsabweisenden Tränkung versehen.

Der mit einer derartigen elektrischen Trennstelle versehene Gasabsperrhahn weist nicht nur die erforderlichen elektrischen Isolationswerte auf, die durch Feuchtigkeit aufgrund der Tränkung nicht verschlechtert werden. Durch die Abschrägungen an den Enden der Gewindebüchse 10 und geeignete Ausbildung der Verbindungshülse 12 können auch Kriech- und Luftwege den sich ergebenden Forderungen angepaßt werden. Auch die Ausbildung einer Blitzüberschlagstrecke ist möglich, wenn Teile des abgeschrägten freien Endes der Verbindungshülse 12 nach innen gebogen werden. Durch die Tränkung werden Inhomogenitäten der Schicht 11, die zu elektrischen Überschlägen führen können, beseitigt. Außerdem wird die gewünschte Feuersicherheit geliefert.

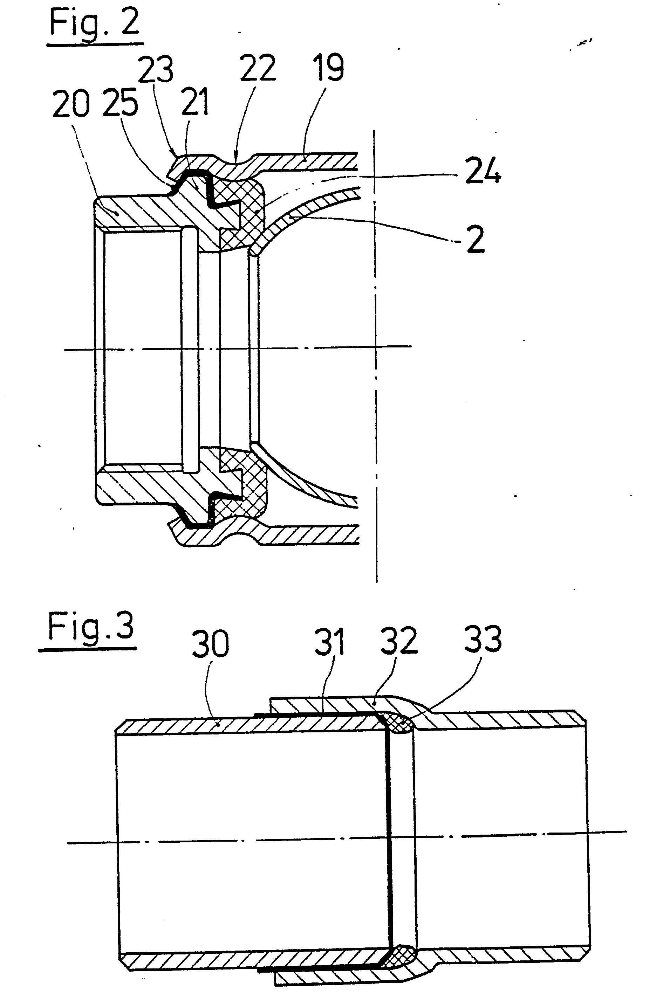

Bei der in Fig. 2 dargestellten Ausführungsform ist in ein Rohrgehäuse 19 ein Gewindestück 20 eingesetzt, das durch plastische Verformung des Rohrgehäuses 19 festgehalten ist. Zu diesem Zweck ist eine im Querschnitt trapezförmige Erhöhung 21 mit einer Schicht 25 aus Zirkonoxid, imprägniert mit einer elektrisch isolierenden, feuchtigkeitsabweisenden Tränkung, mit einer Dicke von 0,8 mm versehen. Nach Einsetzen des Gewindestücks 20 in das Gehäuseende wird vorzugsweise durch einen Einrollvorgang eine Sickung 22 sowie eine Umbördelung 23 am freien Ende des Rohrgehäuses 19 vorgenommen. Hierdurch wirken der zylindrische Teil sowie große Teile der anschliessenden Flanken der trapezförmigen Erhöhung 21 unter Druckspannung mit dem Rohrgehäuse 19 zusammen, so daß sowohl die Kräfteübertragung als auch die Abdichtung bei höherer Temperatur gewährleistet ist. Zur Abdichtung der Kugel 2 und gegenseitiger Abdichtung von Rohrgehäuse 19 und Gewindestück 20 ist ein Kautschukformstück 24 vorgesehen, das einen schwalbenschwanzförmigen Fortsatz des Gewindestücks 20 umgreift. Die Außenseite dieses Fortsatzes ist ebenfalls mit der Schicht 25 versehen, so daß durch Ausbildung dieses Fortsatzes Kriech- und Luftwege wunschgemäß abgestimmt werden können.

Das aus Fig. 3 ersichtliche Isolierstück in Form eines Rohrstutzens 30 dient zur elektrischen Trennung von Rohrteilen, die beidseits mit dem Isolierstück verschweißt werden können, und weist am Außenumfang seines Endabschnitts eine Schicht 31 aus $Al_2O_3$, imprägniert mit einer elektrisch isolierenden, feuchtigkeitsabweisenden Tränkung, mit einer Dicke von 0,6 mm auf. Der beschichtete Rohrstutzen 30 ist unter Druckeinwirkung einer Hülse 32, deren Durchmesser nach Einschieben des beschichteten Rohrstutzens 30 mechanisch, z.B. in einer Preßform, verkleinert wurde. Eine Elastomerdichtung 33 dient zur zusätzlichen Abdichtung bei Betriebstemperatur. Das Isolierstück 30 weist bei einfachem Aufbau, geringem Platzbedarf und einwandfreier Dichtheit die erforderliche Widerstandsfähigkeit gegen mechanische, thermische und elektrische Beanspruchung auf.

Nach der Montage kann man die freiliegenden Stirnflächen mit einem feuchtigkeitsabweisenden, elektrisch isolierenden Überzug beschichten. Zum Tränken und Beschichten eignet sich etwa eine Substanz auf PVC-Basis, als "Scotch Kote 1610" von der 3M Company erhältlich.

## Patentansprüche

1. Elektrische Trennstelle in Rohrleitungsteilen, bei der rohrförmige Abschnitte (10, 12; 20, 22; 30, 32) zur Gänze oder an den Enden unter Zwischenschaltung einer elektrisch isolierenden Schicht (11; 25; 31) aus anorganischem Isolierstoff kraftübertragend und dicht verbindend miteinander in Eingriff stehen, dadurch gekennzeichnet, daß die Schicht (11; 25; 31) aus anorganischem Isolierstoff mit einer elektrisch isolierenden, feuchtigkeitsabweisenden Tränkung versehen ist.

2. Trennstelle nach Anspruch 1, dadurch gekennzeichnet, daß die Schicht (11; 25; 31) aus anorganischem Isolierstoff mit einem elektrisch isolierenden, feuchtigkeitsabweisenden Überzug versehen ist.

## Claims

1. Electrical isolating point in lengths of pipe, in which tubular sections (10, 12; 20, 22; 30, 32) engage with one another either over their entire length or at the ends, with an electrically insulating layer (11; 25; 31) of inorganic insulating material arranged between them, to form a load-transmitting and sealing connection, characterised in that the layer (11; 25; 31) of inorganic insulating material is impregnated with an electrically insulating, moisture-repellent substance.

2. Isolating point according to claim 1, characterised in that the layer (11; 25; 31) of inorganic insulating material is provided with an electrically insulating, moisture-repellent coating.

**Revendications**

1. Section d'isolement électrique pour tronçons de tuyauterie (10, 12; 20, 22; 30, 32) reliés entre eux avec interposition, sur toute leur longueur ou aux extrémités, d'une couche d'isolation électrique (11, 25, 31) constituée d'une matière isolante inorganique, supportant les efforts et fermement maintenus assemblés entre eux, caractérisée en ce que ladite couche (11, 25, 31) de matière isolante inorganique comporte une imprégnation isolante électriquement et hydrofuge.

2. Section d'isolement suivant la revendication 1, caractérisée en ce que ladite couche (11, 25, 31) de matière isolante inorganique est munie d'un revêtement isolant électriquement et hydrofuge.

# Fig. 1

## Fig. 2

## Fig. 3